# FASCICULE DE BREVET EUROPEEN

(11) **EP 0 834 794 B1**
(45) Date de publication et mention de la délivrance du brevet: **08.01.2003**
(21) Numéro de dépôt: 97402288.1
(22) Date de dépôt: 01.10.1997
(51) Int. Cl.: G06F 1/16, H02B 1/30, A47B 21/03

(54) **Armoire de distribution électrique munie d'un casier logeant une tablette extractible**
Schaltschrank mit einem Schaltfach zur Unterbringung einer ausziehbaren Arbeitsplatte
Cabinet provided with a drawer compartment for housing a tray

(30) Priorité: 03.10.1996 FR 9612285
(43) Date de publication de la demande: 08.04.1998
(73) Titulaire: Schneider Electric Industries SAS, 92500 Rueil-Malmaison (FR)
(72) Inventeur: Gros, David, 67260 Harskirchen (FR); Kaczamarek, Stéphane, 67260 Sarre-Union (FR); Tabourin, Daniel, 69890 La Tour De Salvagny (FR)

(56) Documents cités:
- DE-A- 4 330 926
- DE-A- 4 331 110
- FR-A- 2 658 368
- US-A- 4 931 978

## Description

La présente invention se rapporte à une armoire de distribution électrique, ou à un dispositif analogue, incorporant dans sa façade un casier qui peut loger une tablette extractible servant de support à un clavier de commande ou à d'autres organes d'interface pour un opérateur. Le casier d'une telle armoire comprend un fond horizontal, des parois latérales verticales et une face avant ouverte qui peut être obturée de manière étanche par une porte, la tablette étant extractible en translation vers l'avant du casier et guidée par des glissières télescopiques montées dans le casier.

D'une manière générale, la tablette est extractible en translation par traction sur sa face avant après ouverture de la porte du casier.

Mais la tablette est parfois solidaire de la porte, comme illustré dans le brevet FR 2658368, et l'on tire alors directement sur la porte pour l'extraire. Ce mode de réalisation a l'avantage de permettre d'accéder rapidement à la tablette, dès l'ouverture de la porte. Néanmoins, le casier doit être adapté spécifiquement au logement d'une tablette extractible, sinon, étant dépourvu de porte, il ne peut servir à une autre utilisation.

L'invention a par conséquent pour but de faciliter l'extraction de la tablette d'une manière rapide et simple tout en permettant d'utiliser un casier standard pour son logement.

Selon l'invention, l'armoire est caractérisée en ce que la tablette est extractible grâce à un système d'éjection élastique monté dans le casier, et des moyens de verrouillage de la tablette en position rentrée dans le casier sont prévus dans le casier.

Selon une caractéristique, le système d'éjection élastique comprend un bras plié comportant une partie arrière et une partie avant articulées entre elles, et un dispositif élastique associé à la partie arrière et/ou à la partie avant du bras pour provoquer son déploiement. Le dispositif élastique consiste de préférence en un ressort à gaz.

Le système d'éjection élastique et les moyens de verrouillage constituent avantageusement des moyens d'éjection et de rangement de la tablette de type pousser-pousser.

Selon une autre caractéristique, les moyens de verrouillage comprennent un loqueteau élastique et une butée, montés dans le casier et à l'arrière de la tablette, le loqueteau et la butée coopérant par encliquetage et désencliquetage consécutivement à deux poussées exercées dans le sens d'introduction de la tablette pour le verrouillage et respectivement le déverrouillage de la tablette.

La description faite ci-après en regard des dessins fera ressortir les caractéristiques et avantages de l'invention. Aux dessins annexés:
- la figure 1 est une vue en perspective éclatée d'un casier conforme à l'invention;
- la figure 2 illustre une vue en perspective de la face avant du casier auquel est associée une porte rabattable;
- la figure 3 est une vue en coupe d'une tablette pouvant être logée dans le casier selon l'invention;
- la figure 4 est une variante de la figure 3;
- la figure 5 est une vue en perspective d'une variante de réalisation de la tablette;
- les figures 6a et 6b sont des vues de dessus des moyens de verrouillage de la tablette en position rentrée dans le casier.

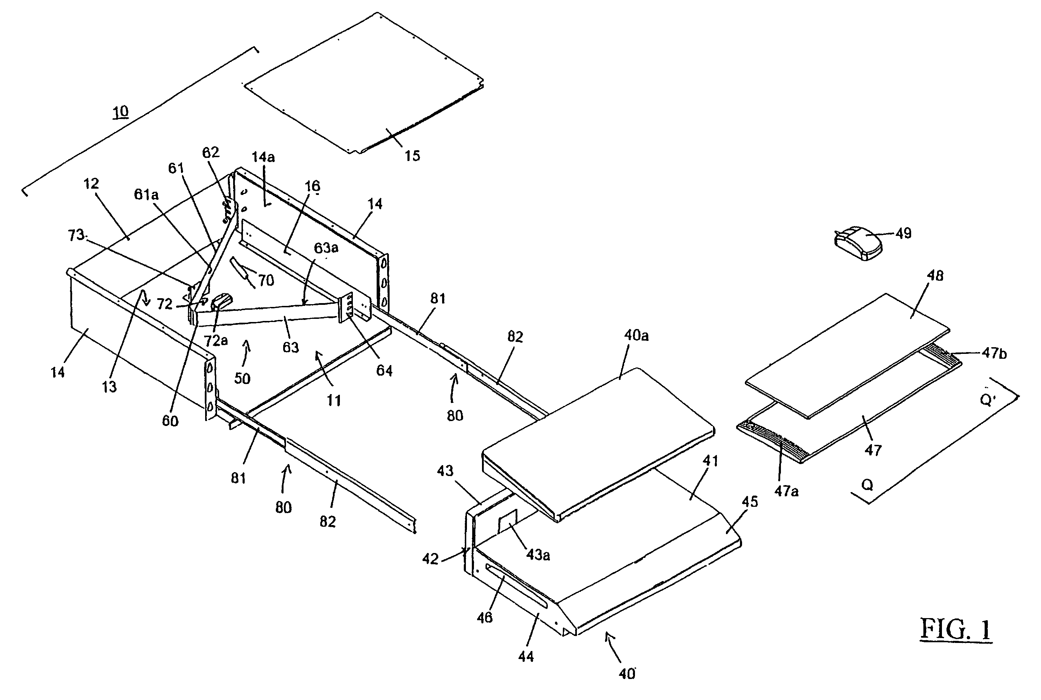

La figure 1 illustre un casier 10 destiné à être incorporé dans la face avant d'une armoire électrique non représentée. Le casier 10 est fixé entre des montants verticaux et des traverses d'une ossature formant le châssis de l'armoire électrique.

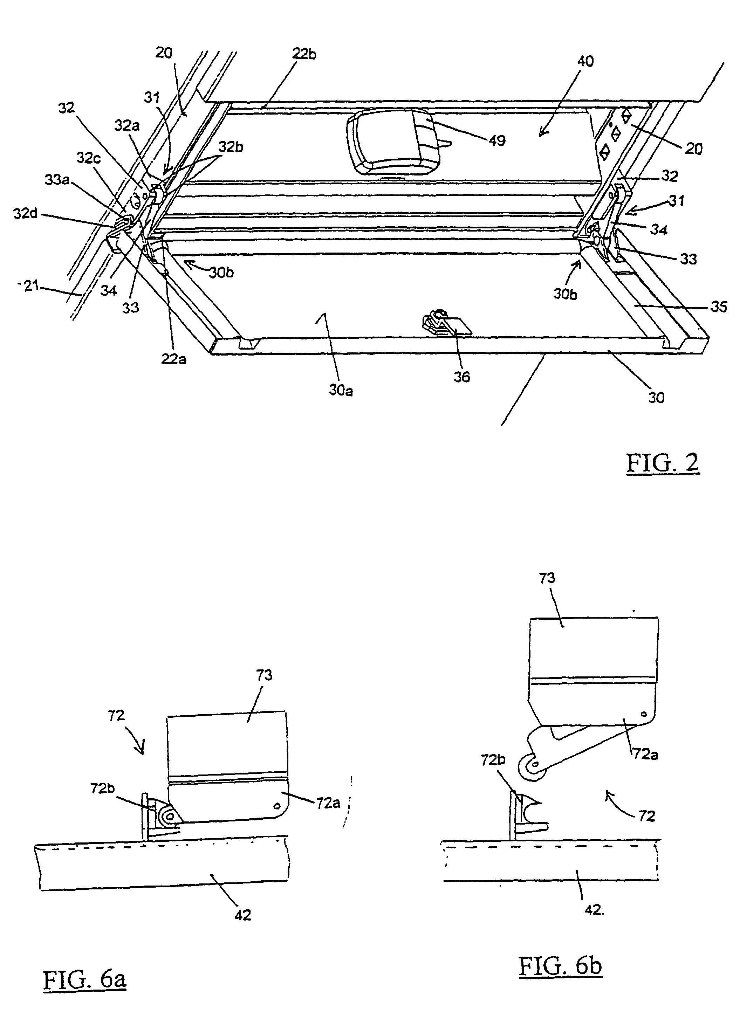

Le casier 10 comprend une face avant verticale 11 ouverte, une paroi arrière verticale 12, un fond horizontal 13, des parois latérales verticales 14 et une partie supérieure horizontale ou couvercle 15, la face avant 11 pouvant être obturée de manière étanche par une porte rabattable 30, visible à la figure 2.

Le casier 10 est destiné à loger une tablette 40 servant de support à un clavier 40a ou à d'autres organes d'interface avec un opérateur.

La tablette 40 est extractible par la face avant 11 du casier en position ouverte de la porte 30. Son extraction est réalisée par un système d'éjection 50 élastique, monté dans le casier 10, et son guidage est établi par des glissières télescopiques 80 intemes au casier 10. Les glissières télescopiques 80 comprennent chacune une partie fixe 81 montée dans le casier 10 et une partie coulissante 82 fixée à la tablette 40.

La tablette 40 comprend une face supérieure horizontale 41 servant de support au clavier 40a, des faces latérales 44 et une face arrière verticale 42 dont la partie supérieure 43 est en saillie par rapport au plan contenant la face 41 pour servir de butée arrière au clavier 40a.

La partie coulissante 82 de chaque glissière 80 est avantageusement fixée sur la face inteme d'une face latérale 44 (non illustré sur les figures) de manière à la rendre invisible en position extraite de la tablette. La partie fixe 81 de chaque glissière est disposée parallèlement à une paroi latérale 14 du casier et est fixée à une équerre 16 ou autre élément analogue solidaire du casier 10 de manière à laisser entre l'équerre 16 et la face inteme 14a de la paroi latérale 14 un espace propre à loger une paroi latérale 44 de la tablette. La face arrière 42 de la tablette est adaptée au passage des équerres 16 et des glissières 80. Ce mode de fixation permet, par rapport à celui de l'état de l'art, d'utiliser une tablette 40 de largeur plus grande.

Les faces latérales 44 de la tablette présentent chacune une fente longitudinale 46 de forme adaptée pour le passage d'une tirette 47. La tirette 47 forme une surface de réception d'un tapis 48 pour la mobilité d'une souris 49.

La tirette 47 est plate et s'étend dans un plan QQ'. Elle présente deux extrémités latérales 47a et 47b qui sont en saillie par rapport au plan QQ'.

La tirette 47 est mobile transversalement vers la gauche ou vers la droite et sa course d'extraction est stoppée par des moyens de butée ou de blocage associés à la tablette 40.

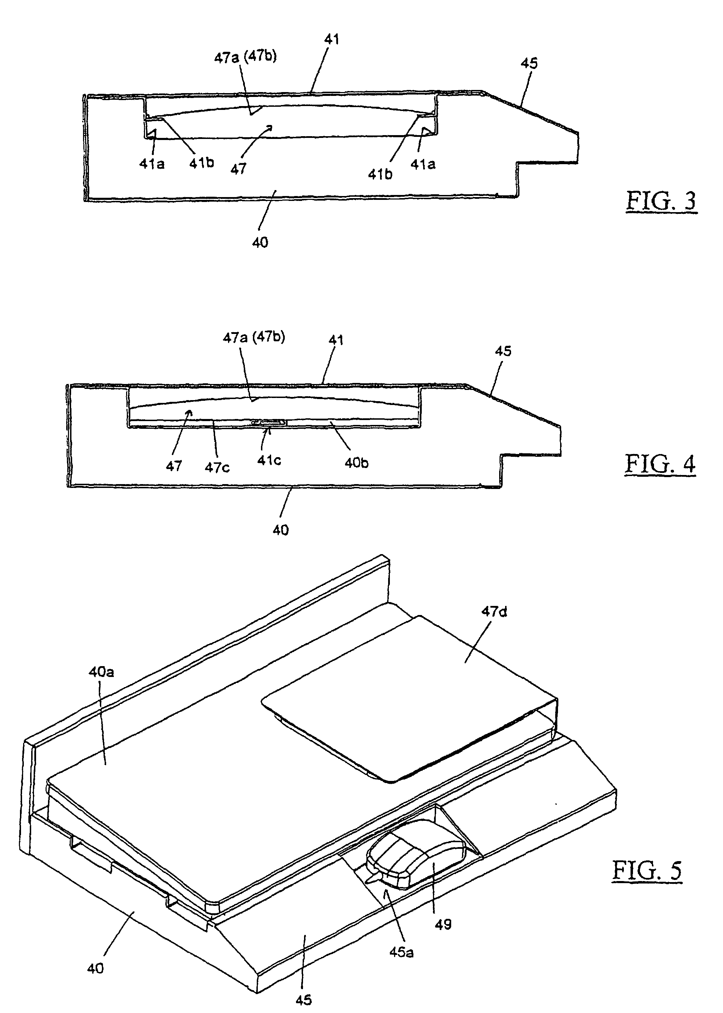

Comme illustré à la figure 3, la tablette 40 comporte des glissières transversales 41a pour la mobilité de la tirette 47, et une ou deux butées intérieures 41b centrales destinées, pour arrêter la tirette, à coopérer avec l'une des extrémités latérales 47a ou 47b opposée à celle par laquelle la tirette est extraite. Dans la variante illustrée à la figure 4, la tirette 47 peut être sortie grâce une glissière transversale télescopique 41c dont la partie fixe et la partie mobile sont montées respectivement, intérieurement à la tablette 40, sur des équerres 40b par exemple, et sous la face externe inférieure 47c de la tirette 47. La glissière 41c est apte à coulisser dans les deux sens et présente un moyen de blocage en milieu de course afin d'arrêter la tirette en position sortie.

Dans un autre mode de réalisation illustré à la figure 5, le support de réception pour la mobilité de la souris 49 n'est pas une tirette mais une tablette amovible 47d clipsable sur l'un ou l'autre des côtés de la tablette 40 et pouvant être pliée pour son logement au-dessus du clavier 40a afin de permettre le rangement de la tablette 40 dans le casier.

La face supérieure 41 de la tablette présente une partie avant ergonomique 45 inclinée vers l'avant et vers le bas et sur laquelle les avant-bras de l'opérateur sont destinés à reposer. La partie inclinée 45 comprend des moyens d'accrochage de la souris 49 pour son rangement. Ces moyens peuvent par exemple consister en une sangle. Selon une variante, il est possible de prévoir dans cette partie inclinée 45 un logement 45a à fond horizontal sur lequel la souris 49 peut reposer (figure 5).

Le système d'éjection 50 élastique est constitué d'un bras plié 60 et d'un dispositif élastique 70 permettant la détente du bras 60.

Le bras plié 60 comprend une partie arrière 61 dont l'extrémité libre 62 est fixée au casier 10 et une partie avant 63 dont l'extrémité libre 64 est reliée à la tablette 40. L'extrémité 62 est assemblée à la face intérieure 14a d'une paroi latérale 14 du casier 10 et l'extrémité 64 est fixée à la face arrière 42 de la tablette 40.

Le dispositif élastique 70 réalise la fonction d'éjection du bras 60 et par conséquent de la tablette 40. Il est positionné dans le plan contenant le bras 60 et est fixé entre les faces intemes 61a et 63a des parties arrière 61 et respectivement avant 63 du bras 60. En position replié, le bras 60 est soumis à la tension du dispositif élastique 70 en compression; lorsque le bras 60 est libre de se déplier, le dispositif 70 peut se détendre et par suite éjecter la partie avant 63 du bras.

Le dispositif élastique 70 s'entend par tout moyen de compression élastique, tel qu'un ressort de torsion par exemple. Dans un mode de réalisation préféré, il est constitué d'un ressort à gaz.

Des moyens de verrouillage 72 permettent le verrouillage de la tablette en position rentrée, c'est-à-dire dans la position pliée du bras 60, ou le déverrouillage de la tablette dans la position dépliée du bras 60. Comme illustré aux figures 6a et 6b, les moyens de verrouillage 72 comprennent un loqueteau 72a élastique et une pièce de butée 72b, le loqueteau 72a étant destiné à coopérer par encliquetage et désencliquetage avec la pièce de butée 72b pour le verrouillage et le déverrouillage de la tablette.

Le loqueteau 72a est fixé à une équerre 73 reposant sur le fond 13 du casier et est disposé en dessous du bras 60. La pièce de butée 72b est montée sur la face arrière 42 de la tablette.

Dans une variante non illustrée, le loqueteau élastique 72a peut être muni d'une came de verrouillage et fixé à la partie arrière 42 de la tablette, et la pièce de butée 72b peut être constituée par l'équerre 73 munie d'un évidement dans lequel la came est destinée à s'engager et à toumer d'un quart de tour par poussée sur le loqueteau 72a de manière à le verrouiller.

Le système d'éjection 50, en particulier le dispositif élastique 70, et les moyens de verrouillage 72 constituent des moyens d'éjection et de rangement de la tablette 40 de type pousser-pousser qui permettent de manière simple d'éjecter la tablette et de la ranger rapidement. On entend par moyens de type pousser-pousser, des moyens provoquant le verrouillage de la tablette consécutivement à une poussée exercée sur celle-ci pour l'engager dans le casier, en fin de course, et provoquant le déverrouillage de la tablette consécutivement à une poussée exercée dans le même sens. Lorsque la tablette 40 est en position rentrée, la poussée sur sa face avant déverrouille le loqueteau 72a, puis le relâchement libère le loqueteau 72a de sa butée 72b, et sous l'action du ressort 70, le bras 60 se déploie en éjectant la partie avant 63 qui projette la tablette 40 vers l'extérieur du casier 10. En position sortie de la tablette 40, la poussée sur sa face avant permet de la rentrer dans le casier 10, le bras 60 se pliant, la butée 72b rencontre le loqueteau 72a qui se verrouille élastiquement en bloquant la tablette.

Pour le passage de conducteurs tels que des câbles de liaison avec le clavier ou des organes d'interface vers l'intérieur du casier 10, par exemple les cordons électriques du clavier 40a et de la souris 49, la partie supérieure 43 de la tablette comporte un évidement 43a. En outre le bras 60 sert avantageusement de support et de positionnement à ces conducteurs en vue de les acheminer vers la paroi arrière 12 du casier; les conducteurs peuvent être retenus par tous moyens de maintien montés sur le bras 60, tels que des colliers de serrage ou des encoches. Le guidage des conducteurs dans le casier 10 évite ainsi de les coincer dans le dispositif élastique 70, dans les moyens de verrouillage 72 et/ou dans les glissières 80.

Lorsque la tablette 40 est logée à l'intérieur du casier 10, la face avant 11 de ce demier peut être fermée par la porte 30 rabattable vers le bas et illustrée à la figure 2. La porte 30 est indépendante de la tablette 40, elle est fixée et articulée à des montants 20 de l'armoire par des dispositifs de fixation et d'articulation 31 prévus à ses coins inférieurs 30b.

Un dispositif 31 comprend une pièce de montage 32 fixée aux montants 20, une équerre 33 solidaire de la face inteme 30a de la porte et une biellette 34 de liaison entre la pièce 32 et l'équerre 33. La pièce de montage 32 comporte d'une part une partie supérieure 32a qui présente sur sa face arrière une surface de fixation aux montants 20 et sur sa face avant deux ailes parallèles 32b, et d'autre part une partie inférieure 32c qui présente une glissière oblique 32d. L'équerre 33 comprend à une extrémité libre un ergot de positionnement 33a destiné à coulisser dans la glissière 32d. La biellette de liaison 34 est fixé à l'une de ses extrémités à l'équerre 33 et est montée en rotation à son extrémité opposée entre les ailes 32b de la pièce de montage 32. Ce dispositif 31, connu dans l'état de l'art des dispositifs à charnières, permet d'ouvrir complètement la porte 30 perpendiculairement aux montants 20 sans qu'elle bute dans un panneau inférieur 21 de l'armoire et dans une traverse inférieure 22a de l'armoire séparant le casier 10 du panneau inférieur 21.

Un joint périphérique 35 est disposé sur la face interne 30a de la porte, il est destiné à s'appliquer sur les montants 20 et les traverses supérieure 22b et inférieure 22a de l'armoire de manière à assurer l'étanchéité du casier.

Enfin, le verrouillage de la porte 30 en position fermée est réalisé grâce à une came de verrouillage 36.

Dans la description ci-dessus, la porte rabattable 30 est indépendante de la tablette 40 afin d'utiliser un casier standard. Il va des soi que le système d'éjection 50 élastique est aussi bien adapté à une tablette qui comporte de façon solidaire de sa face avant une porte destinée à obturer la face avant 11 du casier dans la position rentrée de la tablette.

## Revendications

1. Armoire électrique comportant un casier (10) destiné à loger une tablette (40) servant de support à un clavier ou à d'autres organes d'interface pour un opérateur, le casier comprenant un fond horizontal (13), des parois latérales verticales (14) et une face avant (11) ouverte qui peut être obturée de manière étanche par une porte (30), la tablette (40) étant extractible en translation vers l'avant du casier (10) et guidée par des glissières télescopiques (80) montées dans le casier (10), **caractérisée en ce que**
- la tablette (40) est extractible grâce à un système d'éjection (50) élastique, monté dans le casier (10);
- des moyens de verrouillage (72) de la tablette (40) en position rentrée dans le casier (10) sont prévus dans le casier.

2. Armoire électrique selon la revendication 1, **caractérisée en ce que** le système d'éjection (50) élastique comprend un bras plié (60) comportant une partie arrière (61) et une partie avant (63) articulées entre elles, et un dispositif élastique (70) associé à la partie arrière (61) et/ou à la partie avant (63) du bras pour provoquer son déploiement.

3. Armoire électrique selon la revendication 1, **caractérisée en ce que** le système d'éjection (50) élastique et les moyens de verrouillage (72) constituent des moyens d'éjection et de rangement de la tablette (40) de type pousser-pousser.

4. Armoire électrique selon la revendication 3, **caractérisée en ce que** les moyens de verrouillage (72) comprennent un loqueteau (72a) élastique et une butée (72b), montés dans le casier (10) et à l'arrière de la tablette (40), le loqueteau (72a) et la butée (72b) coopérant par encliquetage et désencliquetage consécutivement à des poussées exercées dans le sens d'introduction de la tablette pour le verrouillage et respectivement le déverrouillage de la tablette.

5. Armoire électrique selon la revendication 2, **caractérisée en ce que** le dispositif élastique (70) consiste en un ressort à gaz.

6. Armoire électrique selon l'une quelconque des revendications précédentes, **caractérisée en ce que** les glissières (80) comprennent une partie fixe (81) et une partie coulissante (82), la partie coulissante (82) étant fixée sur la face interne de parois latérales (44) de la tablette (40) et la partie fixe (81) étant fixée à une équerre (16), ou organe analogue, elle-même solidaire du casier (10), de manière à laisser entre l'équerre (16) et la face inteme d'une paroi latérale (14) du casier un espace propre à loger une paroi latérale (44) de la tablette.

7. Armoire électrique selon l'une quelconque des revendications 2 à 6, **caractérisée en ce que** le bras (60) sert d'organe de support et de positionnement à des conducteurs tels que des câbles de liaison avec le clavier ou les organes d'interface.

8. Armoire électrique selon l'une quelconque des revendications précédentes, **caractérisée en ce que** la tablette (40) comprend des parois latérales (44) qui présentent des fentes (46) pour le passage d'une tirette (47) mobile transversalement vers la gauche ou vers la droite, et des moyens de butée ou de blocage de la tirette (47) en position sortie.

9. Armoire électrique selon l'une quelconque des revendications précédentes, **caractérisée en ce que** la tablette (40) présente une partie avant ergonomique (45) inclinée vers l'avant et vers le bas et servant de support pour le rangement d'une souris (49).

## Claims

1. Electrical cabinet comprising a drawer compartment (10) that will house a tray (40) that acts as a support to a keyboard or other interface device for an operator, the drawer compartment comprising a horizontal bottom (13), vertical side walls (40) and an open front face (11) that can be closed off in a leaktight manner by a door (30), the tray (40) being extractible by translation towards the front of the drawer compartment (10) and guided by telescopic slides (80) installed in the drawer compartment (10), **characterised in that**:
. the tray (40) is extractible by means of an elastic ejection system (50) installed in the drawer compartment (10) ;
. locking means (72) for the tray (40) are provided in the drawer compartment, locking the tray in the retracted position in the drawer compartment (10).

2. Electrical cabinet according to claim 1, **characterised in that** the elastic ejection system (50) comprises a folded arm (60) comprising a back part (61) and a front part (63) hinged to each other, and an elastic device (70) associated with the back part (61) and / or the front part (63) of the arm to extend it.

3. Electrical cabinet according to claim 1, **characterised in that** elastic ejection system (50) and the locking means (72) form means for ejection and storage of the push-push type tray (40).

4. Electrical cabinet according to claim 3, **characterised in that** the locking means (72) comprise an elastic latch (72a) and a stop (72b) installed in the drawer compartment (10) and at the back of the tray (40), the latch (72a) and the stop (72b) cooperating by click fit and click release following pushing actions applied in the direction of insertion of the tray, to lock and unlock the tray respectively.

5. Electrical cabinet according to claim 2, **characterised in that** the elastic device (70) consists of a gas spring.

6. Electrical cabinet according to any one of the previous claims, **characterised in that** the slides (80) comprise a fixed part (81) and a sliding part (82), the sliding part (82) being fixed on the inside face of the side walls (44) of the tray (40) and the fixed part (81) being fixed to a bracket (16), or a similar device itself fixed to the drawer compartment (10), so as to leave a space between the bracket (16) and the inside of a side wall (14) of the drawer compartment, in which a side wall (44) of the tray can fit.

7. Electrical cabinet according to any one of claims 2 to 6, **characterised in that** the arm (60) is used as a support and positioning device for conductors such as cables enabling connection of the keyboard or interface devices.

8. Electrical cabinet according to any one of the previous claims, **characterised in that** the tray (40) comprises side walls (44) in which slits (46) are formed, through which a mobile puller (47) can pass transversely to the left or to the right, and means of stopping or blocking the puller (47) in the extended position.

9. Electrical cabinet according to any one of the previous claims, **characterised in that** the tray (40) is provided with an ergonomic front part (45) inclined forwards and downwards and acting as a support in which a mouse (49) can be stored.

## Patentansprüche

1. Verteilerschrank mit einem Fach (10) zur Aufnahme eines Fachbodens (40), der als Auflage für eine Steuertastatur oder für andere Schnittstelleneinrichtungen für das Bedienungspersonal dient, wobei das Fach einen waagerechten Boden (13), senkrechte Seitenwände (14) und eine offene Vorderseite (11), die durch eine Tür (30) dicht verschlossen werden kann, aufweist, wobei der Fachboden (40) durch Parallelverschiebung in Richtung der Vorderseite des Fachs (10) ausziehbar ist und von in dem Fach (10) eingebauten, zusammenschiebbaren Laufschienen (80), geführt wird, **dadurch gekennzeichnet, dass**:
- der Fachboden (40) dank eines in dem Fach (10) montierten elastischen Auswurfsystems (50) ausziehbar ist.
- in dem Fach Verriegelungsmittel (72) für den in das Fach (10) eingefahrenen Fachboden (40) vorgesehen sind.

2. Verteilerschrank gemäß dem Anspruch 1, **dadurch gekennzeichnet, dass** das elastische Auswurfsystem (50) einen gekrümmten Arm (60), der ein Hinterteil (61) und ein Vorderteil (63) aufweist, die miteinander gelenkig verbunden sind, und eine elastische Vorrichtung (70), die mit dem Hinterteil (61) und/oder dem Vorderteil (63) des Armes verbunden ist, um die Öffnung des Arms zu bewirken, umfasst.

3. Verteilerschrank gemäß dem Anspruch 1, **dadurch gekennzeichnet, dass** das elastische Auswurfsystem (50) und die Verriegelungsmittel (72) Auswurf- und Ablageeinrichtungen für den Fachboden (40) des Typs "Schieber" bilden.

4. Verteilerschrank gemäß dem Anspruch 3, **dadurch gekennzeichnet, dass** die Verriegelungsmittel (72) einen elastischen Schnappverschluss (72a) und ein Anschlagteil (72b) aufweisen, die in dem Fach (10) und auf der Rückseite des Fachbodens (40) montiert sind, wobei der Schnappverschluss (72a) und das Anschlagteil (72b) infolge zweier aufeinander folgender Schubwirkungen, die in Richtung der Einführung des Fachbodens zusammenwirken, um eine Verriegelung beziehungsweise Entriegelung des Fachbodens zu bewirken.

5. Verteilerschrank gemäß dem Anspruch 2, **dadurch gekennzeichnet, dass** die elastische Vorrichtung (70) aus einer Gasfeder besteht.

6. Verteilerschrank gemäß einem der vorgehenden Ansprüche, **dadurch gekennzeichnet, dass** die Laufschienen (80) einen feststehenden Teil (81) und einen verschiebbaren Teil (82) aufweisen, wobei der verschiebbare Teil (82) auf der Innenseite der Seitenflächen (44) des Fachbodens (40) befestigt ist und der feststehende Teil (81) an einem Winkelbeschlag (16) oder einem anderen ähnlichen fest mit dem Fach (10) verbundenen Element, befestigt ist, und zwar so, dass zwischen dem Winkelbeschlag (16) und der Innenseite einer Seitenwand (14) des Fachs ein Abstand gelassen wird, der sich für die Aufnahme einer Seitenwand (44) des Fachbodens eignet.

7. Verteilerschrank gemäß einem der Ansprüche 2 bis 6, **dadurch gekennzeichnet, dass** der Arm (60) als Auflage- und Positioniereinrichtung für Leiter, wie zum Beispiel Kabel zur Verbindung mit der Tastatur und den Schnittstelleneinrichtungen, dient.

8. Verteilerschrank gemäß einem der vorgehenden Ansprüche, **dadurch gekennzeichnet, dass** der Fachboden (40) Seitenwände (44) , die Schlitze (46) für den Durchgang einer quer nach links und rechts bewegbaren ausziehbaren Platte (47), sowie Anschlag- oder Blockierungsmittel der ausziehbaren Platte (47) in der Ausfahrstellung aufweisen.

9. Verteilerschrank gemäß einem der vorgehenden Ansprüche, **dadurch gekennzeichnet, dass** der Fachboden (40) einen ergonomischen Vorderteil (45) aufweist, welcher nach vorne und nach unten geneigt ist und als Auflage für die Ablage einer Maus (49) dient.
